# EUROPEAN PATENT APPLICATION

(11) **EP 4 447 215 A1**
(43) Date of publication of application: **16.10.2024**
(21) Application number: 22903301.4
(22) Date of filing: 01.12.2022
(51) Int. Cl.: H01M 50/258

(54) **BATTERY MODULE, BATTERY PACK, AND VEHICLE**

(30) Priority: 06.12.2021 CN 202123040368 U
(71) Applicant: Beijing Chehejia Automobile Technology Co., Ltd., Beijing 101300 (CN)
(72) Inventor: QI, Pengfei, Beijing 101300 (CN); GUO, Jun, Beijing 101300 (CN); XU, Chao, Beijing 101300 (CN)
(74) Representative: Maiwald GmbH
(86) International application number: PCT/CN2022/135968
(87) International publication number: WO 2023/103879

(57) **Abstract**

The present disclosure relates to the technical field of vehicles, and in particularly to a battery module, a battery pack, and a vehicle. The battery module comprises a plurality of cells, end plates, and side plates, the end plates and the side plates define an accommodating area, the plurality of cells are sequentially arranged in the accommodating area, the side plates are provided with avoidance notches used for avoiding transverse beams or longitudinal beams of a lower box body, and the arrangement of the cells avoids the positions corresponding to the avoidance notches in the accommodating area, so that the battery module is mounted across the transverse beams or the longitudinal beams of the lower box body.

## Description

### CROSS-REFERENCE TO RELATED APPLICATION

The present application is based on claims the priority of Chinese Patent Application No. 202123040368.5, filed on December 6, 2021, the entire content of which is incorporated herein by reference.

### FIELD

The present disclosure relates to the field of vehicles, and more particularly to a battery module, a battery pack, and a vehicle.

### BACKGROUND

The development of new energy vehicles carries the historical mission of alleviating the pressure of oil resource shortage, solving increasingly prominent environmental pollution problems, achieving structural adjustment and transformation upgrading of China's automotive industry, and expanding and strengthening the automotive industry. Power battery systems serve as the power source of electric vehicles, playing an important role in the design and development of the electric vehicles.

A plurality of small battery modules are usually arranged inside an existing battery pack, a plurality of crossbeams and longitudinal beams are arranged in a lower casing of the battery pack, and the battery modules are mounted in the lower casing and fixed on the crossbeams and/or longitudinal beams of the lower casing. Because the battery modules have a small size and large number, and each of the battery modules includes an end plate and a side plate, it results in less mounting space for a cell. In addition, the number of battery modules is large, involving a lot of mechanical connections, wiring harness connections, cooling pipeline connections, etc., thus resulting in a low utilization rate of an internal volume of the battery pack, and a relatively complex assembly of the battery pack.

### SUMMARY

In order to solve the above technical problems or at least partially solve the above technical problems, the present disclosure provides a battery module, a battery pack, and a vehicle.

The present disclosure provides a battery module, including a plurality of cells, an end plate, and a side plate. The end plate and the side plate define an accommodating area, the plurality of cells are sequentially arranged in the accommodating area, the side plate is provided with avoidance notch configured to avoid a crossbeam or a longitudinal beam of a lower casing, and the cells are arranged to avoid a position in the accommodating area corresponding to the avoidance notch, so that the battery module is mounted across the crossbeam or the longitudinal beam of the lower casing.

In some embodiments, the battery module includes two side plates arranged opposite to each other; and the battery module further includes a coupling plate, two ends of the coupling plate are respectively coupled to the two side plates, an arrangement position of the coupling plate along a length direction of the side plate corresponds to a position of the avoidance notch, and an avoidance space is defined below the coupling plate and configured to avoid the crossbeam or the longitudinal beam of the lower casing.

In some embodiments, the coupling plate includes a body portion and a baffle coupled to the body portion, the baffle extends downwards relative to the body portion, the body portion is configured to be fixedly coupled to the crossbeam or the longitudinal beam of the lower casing, and the baffle is configured to block between the crossbeam or the longitudinal beam of the lower casing and the cells to limit expansion of the cells.

In some embodiments, two baffles are provided, the two baffles are spaced apart from each other, and a distance between the two baffles is greater than a width of the crossbeam or the longitudinal beam of the lower casing.

In some embodiments, a lower portion of the baffle is provided with a guide slope.

In some embodiments, the side plate is a cooling plate.

In some embodiments, the cooling plate includes a heat transfer plate and water nozzles respectively arranged at two ends of the heat transfer plate, and the water nozzles are in communication with a fluid channel defined in the heat transfer plate; and
the battery module includes two end plates arranged opposite to each other, the two ends of the heat transfer plate extend outside the two end plates, and the water nozzles are located outside the end plates.

In some embodiments, the battery module further includes a liquid cooling pipe. The liquid cooling pipe is coupled to the water nozzles of the two side plates arranged opposite to each other,, the liquid cooling pipe is located outside the end plate, and the water nozzles and the liquid cooling pipe are arranged external to the end plate.

In some embodiments, the heat transfer plate includes a flow channel area and a non-flow channel area, and the flow channel area is configured for coolant to pass through, to achieve heat exchange between the coolant and the heat transfer plate, and the non-flow channel area of the heat transfer plate is coupled to the end plate.

The present disclosure further provides a battery pack, including a lower casing and a battery module described above, and the battery module is arranged in the lower casing.

In some embodiments, the lower casing is provided with at least one longitudinal beam, and the longitudinal beam divides an interior space of the lower casing into at least two mounting areas, at least two battery modules are provided, and the battery modules are mounted in one-to-one correspondence in the mounting areas.

In some embodiments, the lower casing is provided with a crossbeam located in a middle part of the lower casing along a length direction, the crossbeam is arranged crosswise with the longitudinal beam, and the battery module is mounted in the mounting area across the crossbeam.

In some embodiments, the crossbeam is continuous and uninterrupted from left to right, the crossbeam is arranged crosswise with the longitudinal beam, the longitudinal beam is higher than the crossbeam, an evasion notch is defined below the longitudinal beam to avoid the crossbeam, and the longitudinal beam is welded to the crossbeam.

In some embodiments, the avoidance notch defined in the side plate of the battery module is configured to avoid the crossbeam, and an upper end of the avoidance notch defined in the side plate is higher than a contact surface between the end plate of the battery module and the crossbeam.

The present disclosure further provides a vehicle, including a battery pack described above.

In the battery module, the battery pack and the vehicle provided in embodiments of the present disclosure, the avoidance notch is defined in the side plate of the battery module and configured to avoid the crossbeam (or longitudinal beam) of the lower casing, and the cells are arranged to avoid the position in the accommodating area corresponding to the avoidance notch, that is, the cells are arranged to avoid the crossbeam (or longitudinal beam) of the lower casing, thus the mounting of the battery module across the crossbeam (or longitudinal beam) of the lower casing may be achieved, and the battery module is prevented from being interrupted by the crossbeam (or longitudinal beam), increasing the size of the battery module, reducing the number of battery modules, and reducing the number of end plates of the battery module. Correspondingly, the number of involving mechanical connections, wire harness connections, cooling pipeline connections, etc. is reduced, thus the space occupied by these structures is reduced, more mounting space is left for the cells, and the interior space utilization rate of the battery pack is improved, so that the battery pack with the same size may accommodate a larger number of cells, improvement in a range of the vehicle may be facilitated, and the assembly of the battery pack may be more convenient.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solution of embodiments of the present disclosure or the related art, the drawings required to be used in the description of embodiments or the related art will be briefly described below, and it is obvious that for those skilled in the art, other drawings may be obtained according to these drawings without creative labor.
FIG. 1 is a schematic diagram of a battery pack according to an embodiment of the present disclosure;
FIG. 2 is a sectional view of a battery pack according to an embodiment of the present disclosure;
FIG. 3 is a schematic diagram of a battery module according to an embodiment of the present disclosure;
FIG. 4 is a schematic diagram of a coupling plate according to an embodiment of the present disclosure;
FIG. 5 is a partial enlarged view of the battery module illustrated in FIG. 3;
FIG. 6 is a schematic diagram of an end plate according to an embodiment of the present disclosure; and
FIG. 7 is a schematic diagram of a lower casing according to an embodiment of the present disclosure.

1 battery module; 11 cell; 12 end plate; 121 fixed lifting lug; 13 side plate; 130 avoidance notch; 131 water nozzle; 132 heat transfer plate; 133 fluid channel; 14 coupling plate; 140 body portion; 141 baffle; 15 liquid cooling pipe; 2 lower casing; 20 mounting area; 21 intermediate crossbeam; 22 longitudinal beam; 221 evasion notch; 23 bottom plate; 24 front frame; 25 rear frame; 26 left frame; 27 right frame; 28 front crossbeam; 29 rear crossbeam.

### DETAILED DESCRIPTION

In order to more clearly understand the purpose, features and advantages of the present disclosure, embodiments of the present disclosure will be further described below. It should be noted that embodiments of the present disclosure and the features in embodiments may be combined with each other without conflict.

In order to fully understand the present disclosure, many specific details are explained in the following description, but the present disclosure may also be implemented in other ways different from those described here; obviously, embodiments in the description are only a part of embodiments of the present disclosure, not all of them.

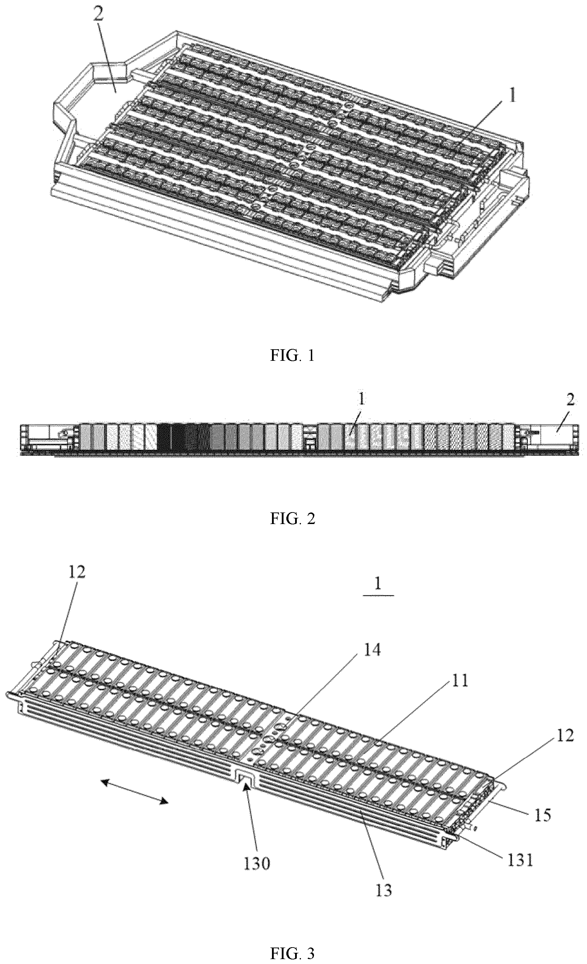

Referring to FIGS. 1 to 3, a battery module 1 provided in some embodiments of the present disclosure includes a plurality of cells 11, an end plate 12, and a side plate 13. The end plate 12 and the side plate 13 define an accommodating area, and the plurality of cells 11 are sequentially arranged in the accommodating area. The side plate 13 is provided with an avoidance notch 130 configured to avoid a crossbeam (or a longitudinal beams) of a lower casing 2, and the cells 11 are arranged to avoid a position in the accommodating area corresponding to the avoidance notch 130, so that the battery module 1 is mounted across the crossbeam or longitudinal beam of the lower casing 2.

In some embodiments, the battery module 1 includes two side plates 13 arranged opposite to each other, and the cells 11 are arranged to avoid the position in the accommodating area corresponding to the avoidance notches 130, that is, the cells 11 are arranged to avoid a position corresponding to the avoidance notches 130 between the two side plates 13, so that the cells 11 are arranged to avoid the crossbeam (or the longitudinal beam) of the lower casing 2.

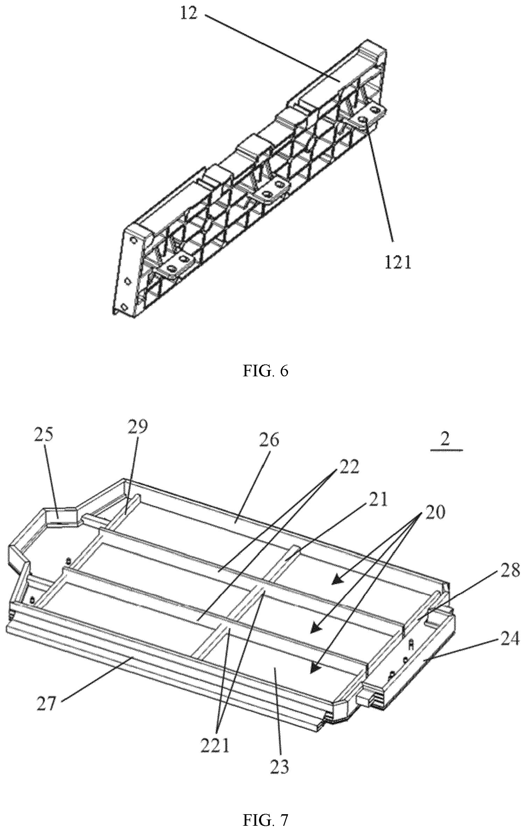

It should be understood that, according to an mounting direction of the battery module 1 in the lower casing 2 of the battery pack, when a length direction of the battery module 1 is mounted parallel to a length direction of the battery pack, the avoidance notches 130 defined in the side plates 13 are configured to avoid the crossbeam of the lower casing 2 (an intermediate crossbeam 21 illustrated in FIG. 7); and when the length direction of the battery module 1 is mounted parallel to a width direction of the battery pack, the avoidance notches 130 defined in the side plates 13 are configured to avoid the longitudinal beam of the lower casing 2.

In the battery module 1 provided in embodiments of the present disclosure, the avoidance notch 130 is defined in the side plate 13 of the battery module 1 and configured to avoid the crossbeam (or longitudinal beam) of the lower casing 2, and the cells 11 are arranged to avoid the position in the accommodating area corresponding to the avoidance notch 130, that is, the cells 1 are arranged to avoid the crossbeam (or longitudinal beam) of the lower casing 2, thus the mounting of the battery module 1 across the crossbeam (or longitudinal beam) of the lower casing 2 may be achieved, the battery module 1 is prevented from being interrupted by the crossbeam or longitudinal beam of the lower casing 2, increasing the size of the battery module 1, reducing the number of battery modules 1, and reducing the number of end plates of the battery module 1. Correspondingly, the number of involving mechanical connections, wire harness connections, cooling pipeline connections, etc. is reduced, thus the space occupied by these structures is reduced, more mounting space is left for the cells, and the interior space utilization rate of the battery pack is improved, so that the battery pack with the same size may accommodate a larger number of cells 11, improvement in a range of the vehicle may be facilitated, and the assembly of the battery pack may be more convenient.

In addition, when the length direction of the battery module 1 is mounted parallel to the length direction of the battery pack, the battery module 1 may be realized to run through a length of the battery pack, so that the size of the battery module 1 is increased to a greater extent, the number of battery module 1 is reduced, and the interior space utilization rate of the battery pack is more effectively improved.

In some embodiments, as illustrated in FIG. 3, the battery module 1 includes the two side plates 13 arranged opposite to each other, and the battery module 1 further includes a coupling plate 14. Two ends of the coupling plate 14 are respectively coupled to the two side plates 13, an arrangement position of the coupling plate 14 along a length direction of the side plate 13 corresponds to a position of the avoidance notch 130, and an avoidance space is defined below the coupling plate 14 and configured to avoid the crossbeam or longitudinal beam of the lower casing 2. Further, the battery module 1 may also include two end plates 12 arranged opposite to each other, and the coupling plate 14 is arranged between the two end plates 12 (the coupling plate 14 may also be called an intermediate end plate). Referring to FIG. 3, a double-sided arrow illustrated in the figure represents the length direction of the side plate 13.

By arranging the coupling plate 14, the structural strength of the battery module 1 may be enhanced. The coupling plate 14 is arranged at a position corresponding to the avoidance notch 30 in the side plate 13, and an avoidance space is defined below the coupling plate 14 and configured to avoid the crossbeam (or longitudinal beam) of the lower casing 2, so that the arrangement of the coupling plate 14 does not affect the mounting of the battery module 1 across the crossbeam (or longitudinal beam) of the lower casing 2. In a specific embodiment, the coupling plate 14 and the crossbeam (or longitudinal beam) of the lower casing 2 may be coupled by a bolt to enhance the overall rigidity of the battery module 1.

It should be noted that the number of coupling plates 14 is not limited to one, and the number of coupling plates 14 may be set according to the number of crossbeams (or longitudinal beams) of the lower casing 2 that need to be avoided.

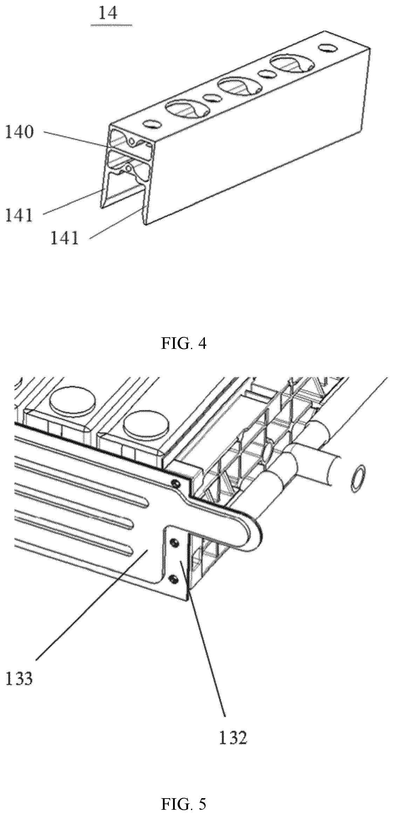

Further, as illustrated in FIG. 4, the coupling plate 14 includes a body portion 140 and a baffle 141 coupled to the body portion 140, the baffle 141 extends downwards relative to the body portion 140, the body portion 140 is configured to be fixedly coupled to the crossbeam (or longitudinal beam) of the lower casing 2, and the baffle 141 is configured to block between the crossbeam (or longitudinal beam) of the lower casing 2 and the cells 11 to limit the expansion of the cells 11.

In some embodiments, the baffle 141 extends downwards from a contact surface between the coupling plate 14 and the crossbeam (or longitudinal beam). The presence of the baffle 141 increases a contact area between the cell 11 and the coupling plate 14, avoiding stress concentration when the cell 11 expands, and also avoiding stress concentration when the battery module 1 is lifted.

Further, as illustrated in FIG. 4, two baffles 141 are provided, and the two baffles 141 are spaced from each other, and the avoidance space is defined below the body portion 140 and between the two baffles 141 and configured to avoid the crossbeam (or longitudinal beam) of the lower casing 2. A distance between the two baffles 141 is greater than a width of the crossbeam (or longitudinal beam) of the lower casing 2, thus facilitating assembly. Furthermore, a lower portion of the baffle 141 is provided with a guide slope, and the guide slope facilitates the assembly of the battery module when the battery module 1 is lifted from top to bottom to the lower casing 2.

In some embodiments, as illustrated in FIG. 3, the side plate 13 is a cooling plate to dissipate heat from the cells 11, reducing the risk of thermal runaway of the battery pack. In some embodiments, the cooling plate may be a liquid cooling plate.

Further, as illustrated in FIGS. 3 and 5, the cooling plate includes a heat transfer plate 132 and water nozzles 131 respectively arranged at two ends of the heat transfer plate 132, a fluid channel 133 is defined in the heat transfer plate 132, and the water nozzles 131 are in communication with the fluid channel 133 defined in the heat transfer plate 132. The coolant flows into the fluid channel 133 through one of the water nozzles 131 and flows out from the other water nozzle 131, achieving heat exchange between the coolant and the heat transfer plate 132, and achieving heat dissipation of the cells.

Further, the battery module 1 includes the two end plates 12 arranged opposite to each other, the two ends of the heat transfer plate 132 respectively extend outside the two end plates 12, and the water nozzles 131 are located outside the end plates 12. The battery module 1 further includes a liquid cooling pipe 15, the liquid cooling pipe 15 is coupled to the water nozzles 131 of the two side plates 13 arranged opposite to each other, the liquid cooling pipe 15 is located outside the end plate 12, and the water nozzles 131 and the liquid cooling pipe 15 are arranged external to the end plate 12 to facilitate pipeline assembly.

In some embodiments, the heat transfer plate 132 includes a flow channel area and a non-flow channel area, and the flow channel area is configured for coolant to pass through, to achieve heat exchange between the coolant and the heat transfer plate 132, and the non-flow channel area of the heat transfer plate 132 is coupled to the end plate 12. Specifically, the end plate 12 may be provided with a thread, the non-flow channel area of the heat transfer plate 132 has a hole, and they are coupled by a screw.

Referring to FIGS. 1 and 2, the present disclosure further provides a battery pack, including the lower casing 2 and the battery module 1 according to any one of above embodiments. The battery module 1 is arranged in the lower casing 2, and the battery module 1 may be mounted across the crossbeam (or longitudinal beam) of the lower casing 2.

The following embodiment takes the mounting of the battery module 1 across a crossbeam of the lower casing 2 as an example. The mounting of the battery module 1 across a longitudinal beam of the lower casing 2 is similar to the structure described in the following embodiment, and the structure of the battery module may be adaptively adjusted according to the positions of the crossbeam and the longitudinal beam of the lower casing, which will not be repeated here.

In some embodiments, as illustrated in FIGS. 1 and 7, the lower casing 2 is provided with at least one longitudinal beam 22, and the longitudinal beam 22 divides an interior space of the lower casing 2 into at least two mounting areas 20. At least two battery modules 1 are provided, and the battery modules 1 are mounted in one-to-one correspondence in the mounting areas 20. In this embodiment, it is possible that a length direction of battery module 1 is mounted parallel to a length direction of the battery pack, that is, the battery module 1 may be realized to run through a length of the battery pack, so that the size of the battery module 1 is increased to a greater extent and the interior space utilization rate of the battery pack is more effectively improved.

In some embodiments, the lower casing 2 includes front and rear frames (a front frame 24, a rear frame 25), left and right frames (a left frame 26, a right frame 27), front and rear crossbeams (a front crossbeam 28, a rear crossbeam 29), at least one longitudinal beam 22 (two longitudinal beams illustrated in FIG. 7), and a bottom plate 23. The above front and rear crossbeams, longitudinal beams, front and rear frames, left and right frames, and bottom plates define a plurality of areas configured to arrange the battery module 1.

The front and rear crossbeams are shorter than the end plate 12 of the battery module 1 to facilitate the mounting of battery module 1. A fixed lifting lug 121 is arranged at a certain height of the end plate 12 of the battery module 1, and the fixed lifting lug 121 is coupled to the front and rear crossbeams by a bolt. The water nozzle 131 and the liquid cooling pipe 15 of the battery module 1 are arranged above the front and rear crossbeams.

Further, as illustrated in FIG. 7, the lower casing 2 is further provided with an intermediate crossbeam 21, and the intermediate crossbeam 21 is located in a middle part of the lower casing 2 along a length direction. The intermediate crossbeam 21 is coupled to the longitudinal beam 22, the left and right frames, and the bottom plate 23. A first function of the intermediate crossbeam 21 is to arrange a loading point of the battery pack, and a second function is to support the left and right frames when the left and right frames of the battery pack are compressed, preventing the cell 11 from being compressed by the left and right frames, and improving the overall rigidity of the battery pack.

In some embodiments, the intermediate crossbeam 21 is continuous and uninterrupted from left to right, and the intermediate crossbeam 21 is arranged crosswise with the longitudinal beam 22. The longitudinal beam 22 is taller than the intermediate crossbeam 21, and an evasion notch is defined below the longitudinal beam 22 to avoid the intermediate crossbeam 21. The longitudinal beam 22 is welded to the intermediate crossbeam 21. The battery module 1 is arranged in the mounting area 20 defined in the lower casing 2 across the intermediate crossbeam 21, the avoidance notch 130 defined in the side plate 13 of the battery module 1 is configured to avoid the intermediate crossbeam 21, and an upper end of the avoidance notch 130 defined in the side plate 13 is higher than a contact surface between the end plate 12 of the battery module 1 and the intermediate crossbeam 21, so that the battery module 1 is smoothly assembled into the lower casing 2.

Embodiments of the disclosure further provide a vehicle, including a battery pack according to any one of above embodiments.

As the vehicle provided in embodiments of the present disclosure includes the battery pack according to any one of above embodiments, it has the beneficial effect of the battery pack according to any one of above embodiments, which is not repeated herein.

It should be noted that in the present disclosure, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device comprising a series of elements includes not only those elements, but also other elements that are not expressly listed, or also includes elements inherent in such a process, method, article, or device. Without further limitation, an element defined by the phrase "comprising a ..." does not exclude the presence of additional identical elements in the process, method, article or device comprising the element.

In the present disclosure, unless otherwise expressly defined, terms such as "mount", "couple", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure may be understood according to the specific situations.

In the present disclosure, unless otherwise expressly defined, the first feature "below", or "above" a second feature may include an embodiment in which the first feature is in direct contact with the second feature, or the first feature is in indirect contact with the second feature through an intermediate media. And, the first feature "above", "on", or "on top of" a second feature may include an embodiment in which the first feature is right or obliquely "above", "on", or "on top of' the second feature, or just means that the first feature is at a height higher than that of the second feature. A first feature "below", "under", or "on bottom of' a second feature may include an embodiment in which the first feature is right or obliquely "below", "under", or "on bottom of" the second feature, or just means that the first feature is at a height lower than that of the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the above embodiments have been illustrated and described, it may be understood that the above embodiments are illustrative and shall not be understood as limitation to the present disclosure, and changes, modifications, alternatives and variations may be made in the above embodiments by those skilled in the art all fall within the protection scope of the present disclosure.

## Claims

1. A battery module, comprising a plurality of cells, an end plate, and a side plate, wherein the end plate and the side plate define an accommodating area, the plurality of cells are sequentially arranged in the accommodating area, the side plate is provided with an avoidance notch configured to avoid a crossbeam or a longitudinal beam of a lower casing, and the cells are arranged to avoid a position in the accommodating area corresponding to the avoidance notch, so that the battery module is mounted across the crossbeam or the longitudinal beam of the lower casing.

2. The battery module according to claim 1, wherein the battery module comprises two side plates arranged opposite to each other; and
the battery module further comprises a coupling plate, two ends of the coupling plate are respectively coupled to the two side plates, an arrangement position of the coupling plate along a length direction of the side plate corresponds to a position of the avoidance notch, and an avoidance space is defined below the coupling plate and configured to avoid the crossbeam or the longitudinal beam of the lower casing.

3. The battery module according to claim 2, wherein the coupling plate comprises a body portion and a baffle coupled to the body portion, the baffle extends downwards relative to the body portion, the body portion is configured to be fixedly coupled to the crossbeam or the longitudinal beam of the lower casing, and the baffle is configured to block between the crossbeam or the longitudinal beam of the lower casing and the cells to limit expansion of the cells.

4. The battery module according to claim 3, wherein two baffles are provided, the two baffles are spaced apart from each other, and a distance between the two baffles is greater than a width of the crossbeam or the longitudinal beam of the lower casing.

5. The battery module according to claim 4, wherein a lower portion of the baffle is provided with a guide slope.

6. The battery module according to any one of claims 1 to 5, wherein the side plate is a cooling plate.

7. The battery module according to claim 6, wherein the cooling plate comprises a heat transfer plate and water nozzles respectively arranged at two ends of the heat transfer plate, and the water nozzles are in communication with a fluid channel defined in the heat transfer plate; and the battery module comprises two end plates arranged opposite to each other, the two ends of the heat transfer plate respectively extend outside the two end plates, and the water nozzles are located outside the end plates.

8. The battery module according to claim 7, further comprising a liquid cooling pipe, wherein the liquid cooling pipe is coupled to the water nozzles of the two side plates arranged opposite to each other, the liquid cooling pipe is located outside the end plate, and the water nozzles and the liquid cooling pipe are arranged external to the end plate.

9. The battery module according to claim 7 or 8, wherein the heat transfer plate comprises a flow channel area and a non-flow channel area, the flow channel area is configured for coolant to pass through, to achieve heat exchange between the coolant and the heat transfer plate, and the non-flow channel area of the heat transfer plate is coupled to the end plate.

10. A battery pack, comprising a lower casing and a battery module according to any one of claims 1 to 9, the battery module being arranged in the lower casing.

11. The battery pack according to claim 10, wherein the lower casing is provided with at least one longitudinal beam, the longitudinal beam divides an interior space of the lower casing into at least two mounting areas, at least two battery modules are provided, and the battery modules are mounted in one-to-one correspondence in the mounting areas.

12. The battery pack according to claim 11, wherein the lower casing is provided with a crossbeam located in a middle part of the lower casing along a length direction, the crossbeam is arranged crosswise with the longitudinal beam, and the battery module is mounted in the mounting area across the crossbeam.

13. The battery pack according to claim 12, wherein the crossbeam is continuous and uninterrupted from left to right, the crossbeam is arranged crosswise with the longitudinal beam, the longitudinal beam is taller than the crossbeam, an evasion notch is defined below the longitudinal beam to avoid the crossbeam, and the longitudinal beam is welded to the crossbeam.

14. The battery pack according to claim 12 or 13, wherein the avoidance notch defined in the side plate of the battery module is configured to avoid the crossbeam, and an upper end of the avoidance notch defined in the side plate is higher than a contact surface between the end plate of the battery module and the crossbeam.

15. A vehicle, comprising a battery pack according to any one of claims 10 to 14.
